# EUROPEAN PATENT APPLICATION

(11) **EP 4 343 953 A1**
(43) Date of publication of application: **27.03.2024**
(21) Application number: 22845195.1
(22) Date of filing: 13.07.2022
(51) Int. Cl.: H01M 50/528, H01M 50/533, H01M 50/536, H01M 50/538, H01M 10/04

(54) **CYLINDRICAL BATTERY AND VEHICLE**

(30) Priority: 23.07.2021 CN 202110837679
(71) Applicant: BYD Company Limited, Shenzhen, Guangdong 518118 (CN)
(72) Inventor: RONG, Liangbin, Shenzhen, Guangdong 518118 (CN); PAN, Qiu, Shenzhen, Guangdong 518118 (CN); WANG, Xinyue, Shenzhen, Guangdong 518118 (CN); CHENG, Han, Shenzhen, Guangdong 518118 (CN); YUAN, Wansong, Shenzhen, Guangdong 518118 (CN)
(74) Representative: DehnsGermany Partnerschaft von Patentanwälten
(86) International application number: PCT/CN2022/105350
(87) International publication number: WO 2023/001030

(57) **Abstract**

The present disclosure discloses a cylindrical battery, which includes a casing, having an accommodating space; and a negative electrode sheet, a first separator, a positive electrode sheet and a second separator that are wound multiple turns to define an electrode core. The casing is co-axial with the electrode core. The electrode core is at least partially received in the accommodating space. The positive electrode sheet includes a positive electrode material layer and a positive electrode foil layer. The negative electrode sheet includes a negative electrode material layer and a negative electrode foil layer. At least some of the wound turns of the electrode foil layer extends toward one end of the casing to form a positive electrode tab. At least some of the wound turns of the negative electrode foil layer extends toward the other end of the casing to form the negative electrode tab. As a result, a portion of the positive electrode end surface of the electrode core that is not covered by the positive electrode tab is located at at least a side of the positive electrode tab, and a portion of the negative electrode end surface of the electrode core that is not covered by the negative electrode tab is located at at least a side of the negative electrode tab.

## Description

### CROSS REFERENCE TO RELATED APPLICATIONS

The present disclosure claims priority to Chinese Patent Application No. 202110837679.X filed on July 23, 2021 and entitled "Cylindrical battery", which is incorporated herein by reference in its entirety.

### FIELD

The present disclosure relates to the technical field of batteries, and specifically to a cylindrical battery and a vehicle.

### BACKGROUND

In related art, an electrode core of a cylindrical battery is led out by a lead sheet and connected to a connecting sheet; or an exposed tab of the electrode core is flattened and then applied to an end surface of the electrode core, and a current collecting disc is provided above the tab and fixed with the tab by welding.

However, in the solution where the electrode core is led out by the lead sheet and connected to the connecting sheet, the lead sheet is required to be thin to avoid the battery failure caused by piercing an electrode sheet, the overcurrent energy is limited, the lead sheet has serious heat generation, and the current is too large, causing the risk of thermal runaway. In the solution where the electrode core is flattened, high requirement is raised for the welding process, the welding is difficult, the production efficiency is low, and the yield is unstable; and the internal gap of the tab is small, and no other gaps than the process holes can be used for penetration of the electrolyte solution, which is not conducive to the injection, penetration, and infiltration of the electrolyte solution, causing a low injection efficiency.

### SUMMARY

A cylindrical battery according to an embodiment of the present disclosure includes a casing, and a negative electrode sheet, a first separator, a positive electrode sheet and a second separator stacked in sequence. The casing has an accommodating space. The negative electrode sheet, the first separator, the positive electrode sheet and the second separator are wound multiple turns to define an electrode core. The casing is co-axial with the electrode core. The electrode core is at least partially received in the accommodating space. The electrode core has a positive electrode end surface and a negative electrode end surface. The positive electrode sheet includes a positive electrode material layer and a positive electrode foil layer. The negative electrode sheet includes a negative electrode material layer and a negative electrode foil layer. At least some of the wound turns of the positive electrode foil layer extends toward one end of the casing to form a positive electrode tab. As a result, a portion of the positive electrode end surface of the electrode core that is not covered by the positive electrode tab is located at at least a side of the positive electrode tab, and a portion of the negative electrode end surface of the electrode core that is not covered by the negative electrode tab is located at at least a side of the negative electrode tab.

In accordance with the cylindrical battery according to the embodiment of the present disclosure, by constructing the positive electrode tab and the negative electrode tab into not-all lead-out tabs, on the one hand, the thickness and lead-out positions of the positive electrode tab and the negative electrode tab can be selected according to the overcurrent requirement and the battery capacity, to reduce the risk of thermal runaway, and meet the battery capacity and overcurrent requirements for various specifications of cylindrical batteries; and on the other hand, the injection efficiency of the electrolyte solution can be improved, to avoid the overflow of the electrolyte solution.

According to some embodiments of the present disclosure, the positive electrode tab is located between the axis of the electrode core and an outer edge of the positive electrode end surface, and the negative electrode tab is located between the axis of the electrode core and an outer edge of the negative electrode end surface.

According to some embodiments of the present disclosure, two ends of the electrode core respectively include a positive electrode end or a negative electrode end, the positive electrode end has the positive electrode end surface, and the negative electrode end has the negative electrode end surface. The positive electrode tab is formed on the positive electrode end, and the negative electrode tab is formed on the negative electrode end. The positive electrode tab extends out of the positive electrode end surface, and the negative electrode tab extends out of the negative electrode end surface. The positive electrode tab and the negative electrode tab are both constructed to have a ring shape.

In some embodiments, the cylindrical battery further includes: a current collecting disc and a cap. The current collecting disc includes: a positive electrode current collecting disc connected to the positive electrode tab and a negative electrode current collecting disc connected to the negative electrode tab. The cap includes: a positive electrode cap connected to the positive electrode current collecting disc and a negative electrode cap connected to the negative electrode current collecting disc.

In some embodiments, the positive electrode current collecting disc is provided at an inner side of the positive electrode tab and electrically connected to the positive electrode tab; and the negative electrode current collecting disc is provided at an inner side of the negative electrode tab and electrically connected to the negative electrode tab.

In some embodiments, the positive electrode current collecting disc includes a current collecting disc body, a connecting portion located at a peripheral side of the current collecting disc body, and a connecting sheet facing the current collecting disc body. The current collecting disc body is located at an inner side of the ring-shaped positive electrode tab. The connecting portion is attached and connected to an inner wall surface of the positive electrode tab. The connecting sheet is provided for electrical connection with the cap of the cylindrical battery. The negative electrode current collecting disc includes: a current collecting disc body, a connecting portion located at a peripheral side of the current collecting disc body, and a connecting sheet facing the current collecting disc body. The current collecting disc body is located at an inner side of the ring-shaped negative electrode tab. The connecting portion is attached and connected to an inner wall surface of the negative electrode tab. The connecting sheet is provided for electrical connection with the cap of the cylindrical battery.

In some embodiments, the positive electrode current collecting disc and the negative electrode current collecting disc are both constructed into an annular disc. The positive electrode current collecting disc is provided at an outer side of the positive electrode tab and electrically connected to the positive electrode tab; and the negative electrode current collecting disc is provided at an outer side of the negative electrode tab and electrically connected to the negative electrode tab.

In some embodiments, the positive electrode current collecting disc includes a current collecting disc body, a connecting portion located at a peripheral side of the current collecting disc body, and a connecting sheet facing the current collecting disc body. The current collecting disc body is constructed into an annular disc and sleeved on the ring-shaped positive electrode tab. The connecting portion is attached and connected to an outer wall surface of the positive electrode tab. The connecting sheet is provided for electrical connection with the cap of the cylindrical battery. The negative electrode current collecting disc includes: a current collecting disc body, a connecting portion located at a peripheral side of the current collecting disc body, and a connecting sheet facing the current collecting disc body. The current collecting disc body is constructed into an annular disc and sleeved on the ring-shaped negative electrode tab. The connecting portion is attached and connected to an outer wall surface of the negative electrode tab. The connecting sheet is provided for electrical connection with the cap of the cylindrical battery.

In some embodiments, one end of the connecting sheet is connected to the current collecting disc body or the connecting portion, and the other end of the connecting sheet extends radially along the casing towards the axis.

In some embodiments, a spacer ring is provided between the current collecting disc and the end surface of the electrode core, and an insulating pad is provided between the current collecting disc and the cap.

In some embodiments, two ends of the electrode core are respectively formed as the positive electrode end and the negative electrode end, the tabs are provided at the positive electrode end and the negative electrode end to respectively form the positive electrode tab and the negative electrode tab. The current collecting disc includes: a positive electrode current collecting disc connected to the positive electrode tab and a negative electrode current collecting disc connected to the negative electrode tab. The cap includes: a positive electrode cap connected to the positive electrode current collecting disc and a negative electrode cap connected to the negative electrode current collecting disc.

In some embodiments, the positive electrode cap and the negative electrode cap are both constructed into a meta member.

In a second aspect, an embodiment of the present disclosure provides a vehicle. The vehicle includes a cylindrical battery according to any of the above embodiments and a processor. The cylindrical battery is provided inside the vehicle and electrically connected to the processor. The processor is configured to control the charging and discharging of the cylindrical battery.

Additional aspects and advantages of the present disclosure will be partly given in the following description, some of which will become apparent from the following description, or may be learned from practices of the present disclosure.

### BRIEF DESCRIPTION OF THE DRAWINGS

To describe the technical solutions in the embodiments of the present disclosure more clearly, the drawings needed to be used in the embodiments of the present disclosure will be described briefly below. Apparently, the drawings in the following description show some embodiments of the present application. Other drawings can be obtained by a person of ordinary skill in the art from these accompanying drawings without creative efforts.
FIG. 1 is a schematic view showing relative positions of an electrode core and a tab according to an embodiment of the present disclosure.
FIG. 2 is a schematic view showing relative positions of an electrode core and a tab according to another embodiment of the present disclosure.
FIG. 3 is a schematic view showing an electrode core, a tab and a spacer ring according to an embodiment of the present disclosure.
FIG. 4 is a schematic view showing a cylindrical battery according to an embodiment of the present disclosure.
FIG. 5 is a schematic view showing a cylindrical battery upon winding according to an embodiment of the present disclosure.
FIG. 6 is a schematic view showing the cylindrical battery of FIG. 5 after winding.
FIG. 7 is a schematic view showing a vehicle according to an embodiment of the present disclosure.

### List of reference numerals:

100 cylindrical battery, 102 casing; 10 electrode core; 104 positive electrode end surface, 106 negative electrode end surface, 20 tab, 202 positive electrode tab, 204 negative electrode tab, 206 negative electrode sheet, 208 first separator, 210 positive electrode sheet, 212 second separator, 2102 positive electrode material layer, 2104 positive electrode foil layer, 2062 negative electrode material layer, 2064 negative electrode foil layer, 30 current collecting disc, 302 positive electrode current collecting disc, 304 negative electrode current collecting disc, 31 current collecting disc body, 32 connecting portion, 33 connecting sheet, 40 cap, 402 positive electrode cap, 404 negative electrode cap, 50 spacer ring, 60 insulating pad, 602 positive electrode insulating pad, 604 negative electrode insulating pad, 1000 vehicle, 110 processor.

### DETAILED DESCRIPTION

Embodiments of the present disclosure will be described in detail below, and examples of the embodiments are shown in accompanying drawings, where the same or similar elements or the elements having the same or similar functions are denoted by the same or similar reference numerals throughout the description. The embodiments described below with reference to the accompanying drawings are exemplary and merely intended to explain the present disclosure, and cannot be construed as a limitation on the present disclosure.

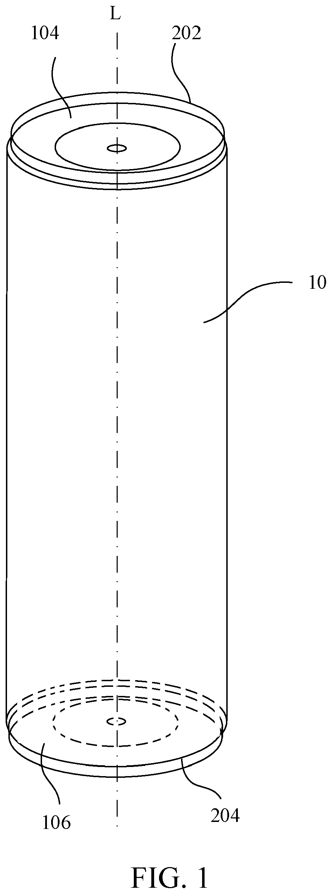

A cylindrical battery 100 according to an embodiment of the present disclosure will be described below with reference to FIGs. 1 to 4.

As shown in FIGs. 1, 2, 4, and 5, the cylindrical battery 100 according to an embodiment in a first aspect of the present disclosure includes a casing 102 and an electrode core 10 at least partially received in the casing 102.Atab 20 is respectively led out from two ends of the electrode core 10. The tab 20 includes a positive electrode tab 202 and a negative electrode tab 204.

The casing 102 has an accommodating space. In the casing 102, a negative electrode sheet 206, a first separator 208, a positive electrode sheet 210 and a second separator 212 are stacked in sequence. The negative electrode sheet 206, the first separator 208, the positive electrode sheet 210 and the second separator 212 are wound multiple turns about the axis L to form the electrode core 10. The electrode core 10 is at least partially received in the accommodating space. The electrode core 10 has a positive electrode end surface 104 and a negative electrode end surface 106.

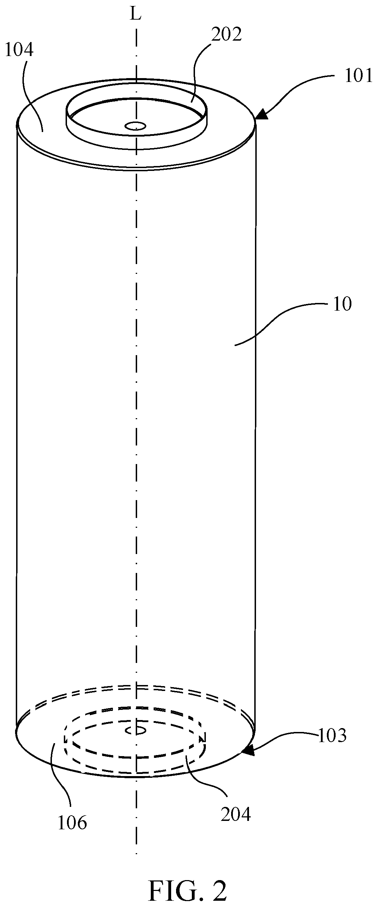

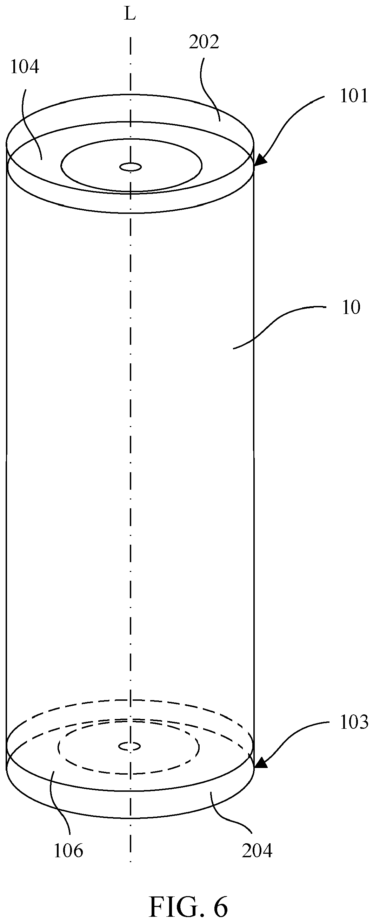

The positive electrode sheet 210 includes a positive electrode material layer 2102 and a positive electrode foil layer 2104. The negative electrode sheet 206 includes a negative electrode material layer 2062 and a negative electrode foil layer 2064. At least some of the wound turns of positive electrode foil layer 2104 extends toward one end of the casing 102 to form the positive electrode tab 202. At least some of the wound turns of negative electrode foil layer 2064 extends toward the other end of the casing 102 to form the negative electrode tab 204. As a result, a portion of the positive electrode end surface 104 of the electrode core 10 that is not covered by the positive electrode tab 202 is located at at least a side of the positive electrode tab 202,and a portion of the negative electrode end surface 106 of the electrode core 10 that is not covered by the negative electrode tab 204 is located at at least a side of the negative electrode tab 204. In an embodiment, the positive electrode end surface 104of the electrode core 10 is exposed at an inner side and/or outer side of the positive electrode tab 202, and the negative electrode end surface 106 of the electrode core 10 is exposed at an inner side and/or outer side of the negative electrode tab 204. In an embodiment, the positive electrode tab 202 extends out of the positive electrode end surface 104 of the electrode core 10, and the negative electrode tab 204 extends out of the negative electrode end surface 106 of the electrode core 10. In an embodiment, as shown in FIG. 6, the positive electrode tab 202 extends out of the positive electrode end surface 104 of the electrode core 10 from an outer edge of the positive electrode end surface 104 of the electrode core 10, and the negative electrode tab 204 extends out of the negative electrode end surface 106 of the electrode core 10 from an outer edge of the negative electrode end surface 106 of the electrode core 10. In an embodiment, as shown in FIGs. 1 and 2, the positive electrode tab 202 extends out of the positive electrode end surface 104 of the electrode core 10 from the interior of the positive electrode end surface 104 of the electrode core 10, and the negative electrode tab 204 extends out of the negative electrode end surface 106 of the electrode core 10 from the interior of the negative electrode end surface 106 of the electrode core 10.

In other words, the casing 102 is cylindrical. The negative electrode sheet 206, the first separator 208, the positive electrode sheet 210 and the second separator 212 stacked in sequence are formed into a whole and wound multiple turns about the axis L to form the electrode core 10. The casing 102 is co-axial with the electrode core 10. At least some of the turns of positive electrode foil layer 2104 in the positive electrode sheet are led out to form the positive electrode tab 202, and at least some of the turns of negative electrode foil layer 2064 in the negative electrode sheet are led out to form the negative electrode tab 204. As a result, at least portions of the two end surfaces of the electrode core 10 are respectively exposed at the inner side and/or outer side of the positive electrode tab 202 and the inner side and/or outer side of the negative electrode tab 204. It should be understood that the inner side of the positive electrode tab 202 refers to a side of the positive electrode tab 202 close to the axis L of the electrode core 10, and the outer side of the positive electrode tab 202 refers to a side of the positive electrode tab 202 away from the axis L of the electrode core 10. The inner side of the negative electrode tab 204 refers to a side of the negative electrode tab 204 close to the axis L of the electrode core 10, and the outer side of the negative electrode tab 204 refers to a side of the negative electrode tab 204 away from the axis L of the electrode core 10.

The positive electrode foil layer 2104 and the negative electrode foil layer 2064 are used for electrical conduction, and can be made of the same material.

In an embodiment, as shown in FIGs. 1 and 2, the positive electrode tab 202 is located between the axis L of the electrode core 10 and the outer edge of the positive electrode end surface 104, and the negative electrode tab 204 is located between the axis L of the electrode core 10 and the outer edge of the negative electrode end surface 106.

In an embodiment, the electrode core 10 is formed of the positive electrode sheet 210, the first separator 208, the negative electrode sheet 206 and the second separator 212 that are wound 15 turns about the axis L. The positive electrode foil layer 2104 and the negative electrode foil layer 2064 from the outermost 10th turns in the electrode core 10 are led out to form a positive electrode lead-out portion and a negative electrode lead-out portion respectively. The positive electrode lead-out portion and the negative electrode lead-out portion are respectively subjected to bending, extrusion, and other processes to form the ring-shaped positive electrode tab 202 and negative electrode tab 204. In another embodiment, the positive electrode foil layer 2104 and the negative electrode foil layer 2064 from the innermost 10th turns in the electrode core 10 are led out to form a positive electrode lead-out portion and a negative electrode lead-out portion respectively. The positive electrode lead-out portion and the negative electrode lead-out portion are respectively subjected to bending, extrusion, and other processes to form the ring-shaped positive electrode tab 202 and negative electrode tab 204.

In such an arrangement, a portion of the positive electrode end surface 104 of the electrode core 10 is covered by the positive electrode tab 202, and the rest is exposed; and a portion of the positive electrode end surface 104 of the electrode core 10 is covered by the negative electrode tab 204, and the rest is exposed. As a result, the positive electrode tab 202 and the negative electrode tab 204 of the present disclosure are both constructed into not-all lead-out tabs, so more gaps can be reserved for injection, penetration and infiltration of the electrolyte solution, thereby effectively improving the injection efficiency, and reducing the probability of overflow of the electrolyte solution. Moreover, based on the capacity and overcurrent requirements for the cylindrical battery 100, the number of turns is reasonably selected, such that the round tab 20 has a large thickness, to meet larger current requirement, making it suitable for use in a battery having larger capacity.

Notably, the turn(s) from which the tab 20 of the electrode core 10 is led out can be reasonably determined as follows. In an embodiment, the electrode core 10 is formed of the positive electrode sheet 210, the first separator 208, the negative electrode sheet 206 and the second separator 212 that are wound 15 turns about the axis L. At this time, according to the overcurrent requirement, the positive electrode tab 202 and the negative electrode tab 204 can be led out from the 10th turn to 15th turn that are wound from the axis L in the electrode core 10. Alternatively, the positive electrode tab 202 and the negative electrode tab 204 can be led out from the 8th turn to 15th turn that are wound from the axis L in the electrode core 10.

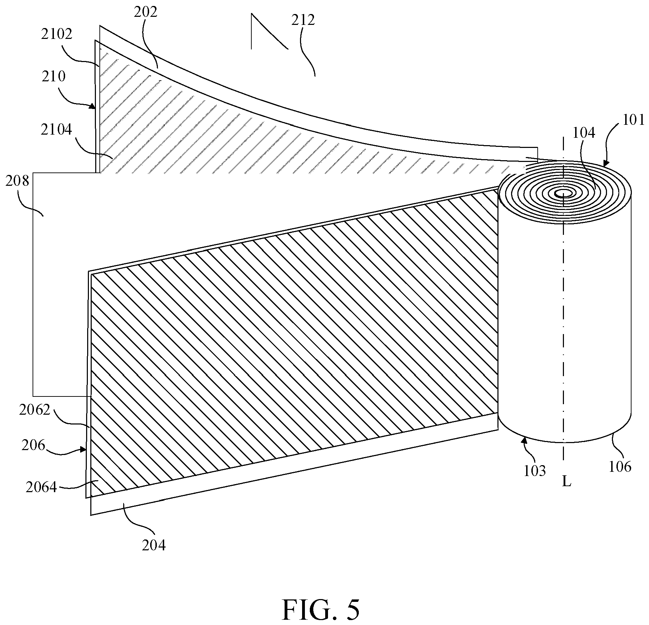

It can be understood that the specific lead-out positions on the end surfaces of the positive electrode tab 202 and the negative electrode tab 204 of the electrode core 10 are not specifically limited in the present disclosure. In an embodiment, the tab 20 can be led out sequentially from the inside to the outside from the axis L of the electrode core 10. For example, the tab is led out starting from the first turn wound from the axis L. In another embodiment, the tab 20 is led out from the outside to the inside sequentially, for example, starting from the outermost turn of the electrode core 10 toward the axis L of the electrode core 10. In another embodiment, the tab 20 can be led out from the middle to both sides. For example, the electrode core 10 includes wound 2n turns in total, and the tab 20 can be led out sequentially starting from an nth turn toward the axis L of the electrode core 10 and toward the outside. As shown in FIGs. 5 and 6, the tab 20 is located at the outermost turn of the wound structure of the electrode core 10.

In accordance with the cylindrical battery 100 according to the embodiment of the present disclosure, the positive electrode tab 202 and the negative electrode tab 204 are both constructed into not-all lead-out tabs. That is to say, the positive electrode tab 202 does not fully cover the positive electrode end surface 104 and the negative electrode tab 204 does not fully cover the negative electrode end surface 106. On the one hand, the thickness and lead-out positions of the positive electrode tab 202 and the negative electrode tab 204 can be selected according to the overcurrent requirement and the battery capacity, to reduce the risk of thermal runaway, and meet the battery capacity and overcurrent requirements for various specifications of cylindrical batteries; and on the other hand, the injection efficiency of the electrolyte solution can be improved, to avoid the overflow of the electrolyte solution.

It can be understood that two ends of the electrode core 10 respectively include a positive electrode end 101 and a negative electrode end 103. The positive electrode tab 202 is formed on the positive electrode end 101, and the negative electrode tab 204 is formed on the negative electrode end 103. The positive electrode end 101 has a positive electrode end surface 104, and the negative electrode end 103 has a negative electrode end surface 106. The positive electrode tab 202 extends out of the positive electrode end surface 104, and the negative electrode tab 204 extends out of the negative electrode end surface 106. The positive electrode tab 202 and the negative electrode tab 204 are both constructed to have a ring shape. That is, the positive electrode tab 202 and the negative electrode tab 204 are formed into ring-shaped tabs by extruding and bending, such that the cylindrical battery 100 is more regular in specification on a whole, and the assembly of the positive electrode tab 202 and the negative electrode tab 204 with peripheral components is facilitated, thus allowing for rational use of space, and making the spatial arrangement of the cylindrical battery 100 more compact.

According to some embodiments of the present disclosure, the current collecting disc 30 includes a positive electrode current collecting disc 302 connected to the positive electrode tab 202 and a negative electrode current collecting disc 304 connected to the negative electrode tab 204. The cap 40 includes a positive electrode cap 402 connected to the positive electrode current collecting disc 302 and a negative electrode cap 404 connected to the negative electrode current collecting disc 304.

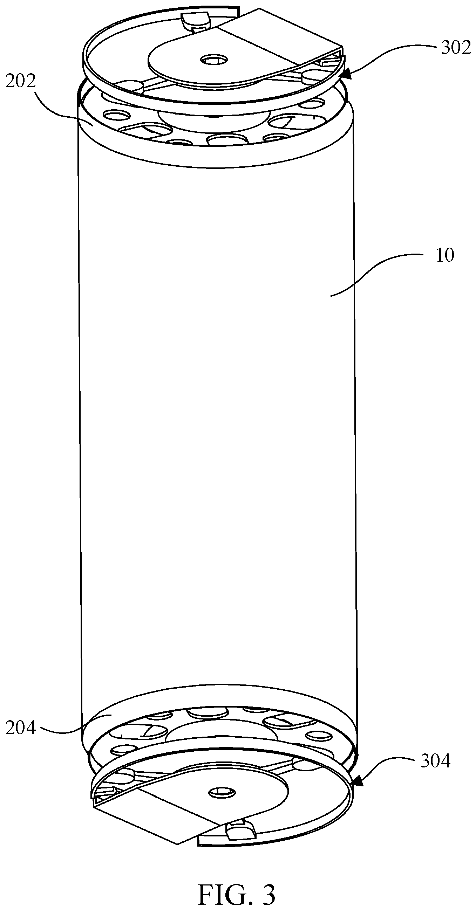

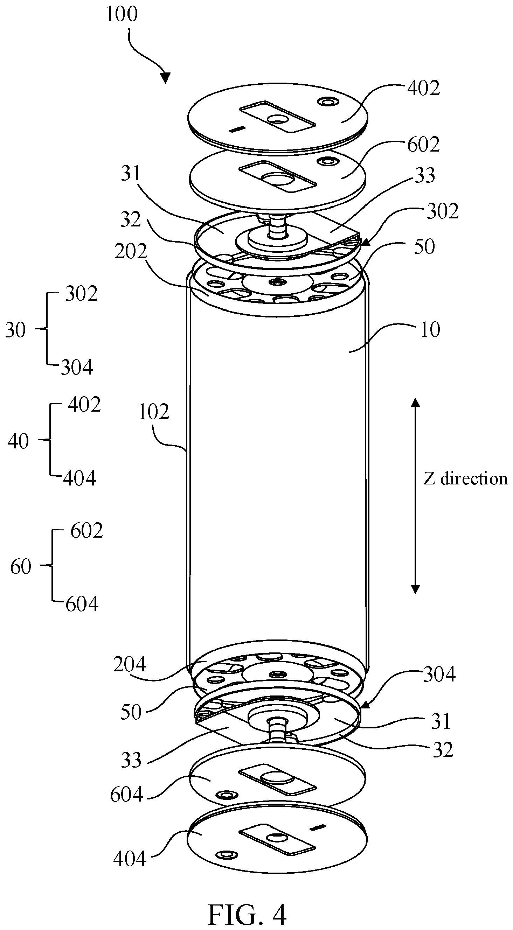

As shown in FIGs. 3 and 4, in some embodiments, the positive electrode current collecting disc 302 is provided at the inner side of the positive electrode tab 202 and electrically connected to the positive electrode tab 202. The negative electrode current collecting disc 304 is provided at the inner side of the negative electrode tab 204 and electrically connected to the negative electrode tab 204.

Specifically, the positive electrode current collecting disc 302 includes a current collecting disc body 31, a connecting portion 32 located at a peripheral side of the current collecting disc body 31, and a connecting sheet 33 facing the current collecting disc body 31. The current collecting disc body 31 is located at the inner side of the ring-shaped positive electrode tab 202. The connecting portion 32 is attached to an inner wall surface of the positive electrode tab 202 and connected to the connecting sheet 33 for electrical connection with the cap 40 of the cylindrical battery 100. In an embodiment, the connecting portion 32 can be connected to the positive electrode tab 202 by welding. Similarly, the negative electrode current collecting disc 304 includes a current collecting disc body 31, a connecting portion 32 located at a peripheral side of the current collecting disc body 31, and a connecting sheet 33 facing the current collecting disc body 31. The current collecting disc body 31 is located at the inner side of the ring-shaped negative electrode tab 204. The connecting portion 32 is attached to an inner wall surface of the negative electrode tab 204 and connected to the connecting sheet 33 for electrical connection with the cap 40 of the cylindrical battery 100. In an embodiment, the connecting portion 32 can be connected to the negative electrode tab 204 by welding. In other words, in the specific embodiment shown in FIG. 1, the current collecting disc body 31 is constructed into a round disc, located at the inner side of the positive electrode tab 202 or the inner side of the negative electrode tab 204. In the process of welding the positive electrode tab 202 or the negative electrode tab 204 with the current collecting disc 30, the positive electrode tab 202 or the negative electrode tab 204 can be welded to the current collecting disc 30, to realize the "thin through thick" welding, and avoid short circuit of the cylindrical battery 100 due to the burning through of the tab 20 in the welding process, thereby improving the safety of the cylindrical battery 100.

Moreover, it can be understood that during the process of welding the tab 20 to the current collecting disc 30 in the present disclosure, the burning through of the tab 20 will not occur, and the structure of the present disclosure can be adopted to replace the existing cylindrical battery with a flattened tab. The size of the tab 20 in a length direction (i.e., the Z direction) of the electrode core 10 can be set to be smaller, to reduce the space occupation by the tab 20 in the whole cylindrical battery 100, and improve the space utilization of the electrode core 10, which is beneficial to the improvement of the energy density of the cylindrical battery 100.

It can be understood that in an embodiment, the current collecting disc 30 is provided at the inner side of the tab 20, to realize the "thin through thick" welding, thus reducing the welding difficulty of the tab 20 and the current collecting disc 30, improving the welding success rate, and improving the processing efficiency and yield of the cylindrical battery 100.

Definitely, the structure of the cylindrical battery 100 of the present disclosure is not limited thereto. In some other embodiments, the positive electrode current collecting disc 302 and the negative electrode current collecting disc 304 are both constructed into annular discs. The positive electrode current collecting disc 302 is provided at the outer side of the positive electrode tab 202 and electrically connected to the positive electrode tab 202. The negative electrode current collecting disc 304 is provided at the outer side of the negative electrode tab 204 and electrically connected to the negative electrode tab 204.

The positive electrode current collecting disc 302 includes a current collecting disc body 31, a connecting portion 32 located at a peripheral side of the current collecting disc body 31, and a connecting sheet 33 facing the current collecting disc body 31. The current collecting disc body 31 is constructed into an annular disc and sleeved on the ring-shaped positive electrode tab 202. The connecting portion 32 is attached and connected to an outer wall surface of the positive electrode tab 202. The connecting sheet 33 is provided for electrical connection with the cap 40 of the cylindrical battery 100. In an embodiment, the connecting portion 32 can be connected to the positive electrode tab 202 by welding. In this embodiment, the same electrical connection effect as that in the previous embodiment where the connecting portion 32 is provided at the inner side of the positive electrode tab 202 can also be achieved, which will not be further described here again.

The negative electrode current collecting disc 304 includes a current collecting disc body 31, a connecting portion 32 located at a peripheral side of the current collecting disc body 31, and a connecting sheet 33 facing the current collecting disc body 31. The current collecting disc body 31 is constructed into an annular disc and sleeved on the ring-shaped negative electrode tab 204. The connecting portion 32 is attached and connected to an outer wall surface of the negative electrode tab 204. The connecting sheet 33 is provided for electrical connection with the cap 40 of the cylindrical battery 100. In an embodiment, the connecting portion 32 can be connected to the negative electrode tab 204 by welding. In this embodiment, the same electrical connection effect as that in the previous embodiment where the connecting portion 32 is provided at the inner side of the negative electrode tab 204 can also be achieved, which will not be further described here again.

In the specific embodiment shown in FIG. 4, the current collecting disc 30 includes a current collecting disc body 31, a connecting portion 32 located at a peripheral side of the current collecting disc body 31, and a connecting sheet 33 facing the current collecting disc body 31. The current collecting disc body 31 is sleeved on the tab 20 or the tab 20 is sleeved on the current collecting disc body 31. The connecting portion 32 is attached to, and connected to the inner wall surface or outer wall surface of the tab 20 by welding. The connecting sheet 33is provided for electrical connection with the cap 40 of the cylindrical battery 100.

Specifically, the size of the current collecting disc 30 can be determined according to the position and size of tab 20. The current collecting disc 30 and the tab 20 are connected by welding. Spot welding, ultrasonic welding and other forms of welding can be used. The tab 20 is electrically connected to the cap 40 by the current collecting disc 30, which can improve the connection stability between the current collecting disc 30 and the tab 20. The tab 20 and the current collecting disc 30 both have high overcurrent capacity, thus improving the working stability and safety of the cylindrical battery 100.

In some embodiments of the present disclosure, one end of the connecting sheet 33 is connected to the current collecting disc body 31 or the connecting portion 32. The other end of the connecting sheet 33 extends radially along the casing towards the axis of the casing 102. As such, on the one hand, the contact area between the connecting sheet 33 and the cap 40 is increased, to improve the stability of electrical connection; and on the other hand, the connecting sheet 33 is arranged facing the end face of the electrode core 10, to reduce the size of the current collecting disc 30 occupied in the Z direction of the cylindrical battery 100, thus further improving the energy density of the cylindrical battery 100.

In some embodiments of the present disclosure, a spacer ring 50 is provided between the current collecting disc 30 and the end face of the electrode core 10. An insulating pad 60 is provided between the current collecting disc 30 and the cap 40. A positive electrode insulating pad 602 is provided between the positive electrode current collecting disc 302 and the positive electrode cap 402. A negative electrode insulating pad 604 is provided between the negative electrode current collecting disc 304 and the negative electrode cap 404. A sealing ring is provided at the periphery of the positive electrode cap 402 and the negative electrode cap 404. In this way, by the insulation of the spacer ring 50, the cap 40 and the insulating pad 60, the short circuit inside the cylindrical battery 100 is avoided, to improve the working stability and safety of the cylindrical battery 100.

In some embodiments, the positive electrode cap 402 and the negative electrode cap 404 are both constructed into meta members. That is, the positive electrode cap 402 and the negative electrode cap 404 are both constructed into members of a single metal, an alloy, or a composite material. In an embodiment where the positive electrode cap 402 and the negative electrode cap 404 are constructed into members of a composite material, the member of a composite material includes at least an electrically conductive metal material.

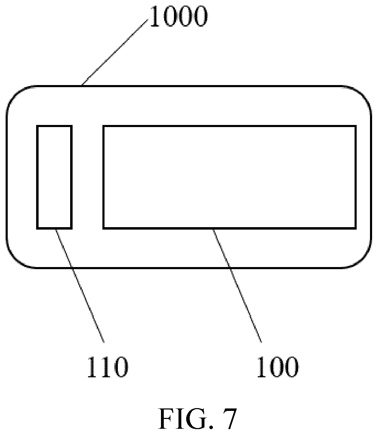

As shown in FIG. 7, an embodiment of the present disclosure provides a vehicle 1000. The vehicle 1000 includes a cylindrical battery 100 according to any of the above embodiments and a processor 110. The cylindrical battery 100 is provided inside the vehicle 1000 and electrically connected to the processor 110. The processor 110 is configured to control the charging and discharging of the cylindrical battery 100.

In the cylindrical battery 100 of the vehicle 1000 according to the embodiment of the present disclosure, the positive electrode tab 202 and the negative electrode tab 204 are both constructed into not-all lead-out tabs. That is to say, the positive electrode tab 202 does not fully cover the positive electrode end surface 104 and the negative electrode tab 204 does not fully cover the negative electrode end surface 106. On the one hand, the thickness and lead-out positions of the positive electrode tab 202 and the negative electrode tab 204 can be selected according to the overcurrent requirement and the battery capacity, to reduce the risk of thermal runaway, and meet the battery capacity and overcurrent requirements for various specifications of cylindrical batteries; and on the other hand, the injection efficiency of the electrolyte solution can be improved, to avoid the overflow of the electrolyte solution.

In the descriptions of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial", "radial", and "circumferential" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the present disclosure.

The term "first", "second", and others used in the specification and claims of the present disclosure are used to distinguish similar objects, rather than describe a particular order or sequence. It should be understood that the data thus used are interchangeable where appropriate so that embodiments of the present disclosure can be implemented in an order other than those illustrated or described herein. The objects distinguished by the words "first" and "second" are usually the same kind, and the number of objects are not limited thereto. For example, the number of the first object may be one, or multiple. Moreover, "and/or" in the specification and claims indicates at least one of the connected objects, and the symbol "j" generally indicates an "or" relationship between the preceding and following objects.

In the descriptions of the present disclosure, "multiple" means two or more.

In the descriptions of the present disclosure, a first feature being "on" or "under" a second feature may include that the first and second features are in direct contact, or may include that the first and second features are not in direct contact but in contact with the aid of other features therebetween. In the present disclosure, unless otherwise clearly specified and defined, the terms "mount", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two components, or an interaction relationship between two components. For those of ordinary skill in the art, specific meanings of the terms in the present disclosure can be understood based on specific situations

In the descriptions of the present disclosure, the first feature being "on", "above" or "over" a second feature includes that the first feature is right above or obliquely above the first feature, or merely indicates that a level of the first feature is higher than that of the second feature.

In the description of the specification, the description with reference to the terms "an embodiment", "some embodiments", "exemplary embodiments", "example", "specific example", or "some examples" and others means that the specific features, structures, materials or characteristics described in connection with the embodiment or example are embraced in at least one embodiment or example of the present disclosure. In the specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described, a person of ordinary skill in the art should understand that various changes, modifications, replacements and variations can be made to the embodiments without departing from the principles and spirit of the present disclosure, and the scope of the present disclosure is as defined by the appended claims and their equivalents.

## Claims

1. A cylindrical battery (100), comprising:
a casing (102), the casing (102) having an accommodating space; and
a negative electrode sheet (206), a first separator (208), a positive electrode sheet (210) and a second separator (212) stacked in sequence, the negative electrode sheet (206), the first separator (208), the positive electrode sheet (210), and the second separator (212) being wound multiple turns to form an electrode core (10), the casing (102) being co-axial with the electrode core (10), the electrode core (10) being at least partially received in the accommodating space, the electrode core (10) having a positive electrode end surface (104) and a negative electrode end surface (106),
the positive electrode sheet (210) comprising a positive electrode material layer (2102) and a positive electrode foil layer (2104), the negative electrode sheet(206) comprising a negative electrode material layer (2062) and a negative electrode foil layer (2064), at least some of the wound turns of the positive electrode foil layer (2104) extending toward one end of the casing(102) to form a positive electrode tab (202), at least some of the wound turns of the negative electrode foil layer (2064) extending toward the other end of the casing (102) to form a negative electrode tab (204), such that a portion of the positive electrode end surface (104) of the electrode core (10) that is not covered by the positive electrode tab (202) is located at at least a side of the positive electrode tab (202), and a portion of the negative electrode end surface (106) of the electrode core (10) that is not covered by the negative electrode tab (204) is located at at least a side of the negative electrode tab (204).

2. The cylindrical battery (100) according to claim 1, wherein the positive electrode tab (202) is located between the axis of the electrode core and an outer edge of the positive electrode end surface (104), and the negative electrode tab (204) is located between the axis of the electrode core and an outer edge of the negative electrode end surface (106).

3. The cylindrical battery (100) according to claim 1, wherein
two ends of the electrode core (10) respectively comprise a positive electrode end (101) and a negative electrode end (103), the positive electrode end (101) has the positive electrode end surface (104), and the negative electrode end (103) has the negative electrode end surface (106);
the positive electrode tab (202) is formed on the positive electrode end (101), the negative electrode tab (204) is formed on the negative electrode end (103), the positive electrode tab (202) extends out of the positive electrode end surface (104), and the negative electrode tab (204) extends out of the negative electrode end surface (106); and
the positive electrode tab (202) and the negative electrode tab (204) are both constructed to have a ring shape.

4. The cylindrical battery (100) according to any one of claims 1 to 3, further comprising: a current collecting disc (30) and a cap (40), wherein the current collecting disc (30) comprises a positive electrode current collecting disc (302) connected to the positive electrode tab (202) and a negative electrode current collecting disc (304) connected to the negative electrode tab (204), and the cap (40) comprises a positive electrode cap (402) connected to the positive electrode current collecting disc (302) and a negative electrode cap (404) connected to the negative electrode current collecting disc (304).

5. The cylindrical battery (100) according to claim 4, wherein the positive electrode current collecting disc (302) is provided at an inner side of the positive electrode tab (202) and electrically connected to the positive electrode tab (202); and the negative electrode current collecting disc (304) is provided at an inner side of the negative electrode tab (204) and electrically connected to the negative electrode tab (204).

6. The cylindrical battery (100) according to claim 5, wherein
the positive electrode current collecting disc (302) comprises a current collecting disc body (31), a connecting portion (32) located at a peripheral side of the current collecting disc body (31), and a connecting sheet (33) facing the current collecting disc body (31), wherein the current collecting disc body (31) is located at the inner side of the ring-shaped positive electrode tab (202), the connecting portion (32) is attached and connected to an inner wall surface of the positive electrode tab (202), and the connecting sheet (33) is provided for electrical connection with the cap (40) of the cylindrical battery (100); and
the negative electrode current collecting disc (304) comprises a current collecting disc body (31), a connecting portion (32) located at a peripheral side of the current collecting disc body (31), and a connecting sheet (33) facing the current collecting disc body (31), wherein the current collecting disc body (31) is located at the inner side of the ring-shaped negative electrode tab (204), the connecting portion (32) is attached to, and connected to an inner wall surface of the negative electrode tab (204) by welding, and the connecting sheet (33) is provided for electrical connection with the cap (40) of the cylindrical battery (100).

7. The cylindrical battery (100) according to claim 4, wherein the positive electrode current collecting disc (302) and the negative electrode current collecting disc (304) are both constructed into annular discs, the positive electrode current collecting disc (302) is provided at an outer side of the positive electrode tab (202) and electrically connected to the positive electrode tab (202), and the negative electrode current collecting disc (304) is provided at an outer side of the negative electrode tab (204) and electrically connected to the negative electrode tab (204).

8. The cylindrical battery (100) according to claim 7, wherein
the positive electrode current collecting disc (302) comprises a current collecting disc body (31), a connecting portion (32) located at a peripheral side of the current collecting disc body (31), and a connecting sheet (33) facing the current collecting disc body (31), wherein the current collecting disc body (31) is constructed into an annular disc and sleeved on the ring-shaped positive electrode tab (202), the connecting portion (32) is attached and connected to an outer wall surface of the positive electrode tab (202), and the connecting sheet (33) is provided for electrical connection with the cap (40) of the cylindrical battery (100); and
the negative electrode current collecting disc (304) comprises a current collecting disc body (31), a connecting portion (32) located at a peripheral side of the current collecting disc body (31), and a connecting sheet (33) facing the current collecting disc body (31), wherein the current collecting disc body (31) is constructed into an annular disc and sleeved on the ring-shaped negative electrode tab (204), the connecting portion (32) is attached and connected to an outer wall surface of the negative electrode tab (204), and the connecting sheet (33) is provided for electrical connection with the cap (40) of the cylindrical battery (100).

9. The cylindrical battery (100) according to claim 4, wherein one end of the connecting sheet (33) is connected to the current collecting disc body (31) or the connecting portion(32), and the other end of the connecting sheet (33) extends radially along the casing (102) toward the axis.

10. The cylindrical battery (100) according to any one of claims 4 to 9, wherein a spacer ring (50) is provided between the current collecting disc (30) and the end surface of the electrode core (10), and an insulating pad (60) is provided between the current collecting disc (30) and the cap (40).

11. A vehicle (1000), comprising: a cylindrical battery (100) according to any one of claims 1 to 10 and a processor (110), the cylindrical battery (100) being provided inside the vehicle (1000) and connected to the processor (110), and the processor (110) being configured to control the charging and discharging of the cylindrical battery (100).
